# EUROPEAN PATENT APPLICATION

(11) **EP 4 776 375 A1**
(43) Date of publication of application: **15.07.2026**
(21) Application number: 24937301.0
(22) Date of filing: 31.12.2024
(51) Int. Cl.: H01M 10/0587

(54) **CORE PACK ASSEMBLY, BATTERY, BATTERY PACK, AND VEHICLE**

(30) Priority: 19.11.2024 CN 202422829268 U
(71) Applicant: Huizhou EVE Power Co., Ltd, Tonghu Town, Zhongkai High-tech District Huizhou, Guangdong 516039 (CN); Eve Power Co., Ltd., Jingmen, Hubei 448000 (CN)
(72) Inventor: HU, Qi, Huizhou, Guangdong 516039 (CN); LI, Si, Huizhou, Guangdong 516039 (CN); CHENG, Zehong, Huizhou, Guangdong 516039 (CN); ZENG, Hanmin, Huizhou, Guangdong 516039 (CN); LIU, Ziwen, Huizhou, Guangdong 516039 (CN); HE, Wei, Huizhou, Guangdong 516039 (CN)
(74) Representative: Zhu, Puxing
(86) International application number: PCT/CN2024/144228
(87) International publication number: WO 2026/107951

(57) **Abstract**

A core pack assembly, a battery, a battery pack, and a vehicle are provided. The core pack assembly includes a core pack and one or more wicking components. The core pack is provided with tabs, and each wicking component is arranged on an outer surface of the core pack and located on a same side of the core pack as the tabs, and is configured to absorb electrolyte outside the core pack and transfer the electrolyte into the core pack.

## Description

This application claims priority to and the benefit of Chinese Patent Application No. 2024228292688, filed with CNIPA on November 19, 2024. The entire disclosure of the above application is incorporated herein by reference.

### Technical Field

The present application relates to the field of battery technology, specifically to a core pack assembly, a battery, a battery pack, and a vehicle.

### Background

In recent years, lithium-ion batteries have been rapidly developed due to their characteristics such as high operating voltage, lightweight, small size, no memory effect, low self-discharge, and long cycle life. The lithium-ion batteries are widely used in various mobile devices, and the demand for long cycle performance of the lithium-ion batteries is increasing.

### Summary

The amount of electrolyte retained in a core pack of a lithium-ion battery is generally fixed. In a later stage of a cycle life of the lithium-ion battery, when the electrolyte inside the core pack is significantly consumed, the energy storage performance of the lithium-ion battery may sharply decline, leading to a "cycle life cliff" phenomenon.

The present invention provides a core pack assembly. The core pack assembly includes a core pack and one or more wicking components. The core pack is provided with tabs. Each wicking component is arranged on an outer surface of the core pack and located on a same side of the core pack as the tabs, and is configured to absorb electrolyte outside the core pack and transfer the electrolyte into the core pack.

The present invention further provides a battery. The battery includes a casing and the aforementioned core pack assembly, which is placed inside the casing.

The present invention further provides a battery pack, which includes the aforementioned battery.

Additionally, the present invention further provides a vehicle, which includes the aforementioned battery or battery pack.

### Beneficial Effects

In the core pack assembly provided by the present invention, by providing a wicking component on a side where a tab is located, the wicking component can absorb electrolyte outside the core pack that is difficult to utilize and transfer the electrolyte to the core pack, which actually improves the electrolyte capacity in the core pack without changing a volume of a battery, thereby slowing down a degradation rate of the cycle performance of the battery during use.

### Brief Description of the Drawings

FIG. 1 is a structural schematic diagram of a core pack assembly according to some embodiments of the present invention.
FIG. 2 is a right view of the core pack assembly according to some embodiments of the present invention.
FIG. 3 is a structural schematic diagram of a wicking component according to some embodiments of the present invention.
FIG. 4 is a perspective schematic diagram of the wicking component according to some embodiments of the present invention.
FIG. 5 is a front view of the wicking component according to some embodiments of the present invention.
FIG. 6 is a sectional view of a battery according to some embodiments of the present invention.
FIG. 7 is an enlarged view of area A in FIG. 5.
FIG. 8 is a top view of the wicking component according to some embodiments of the present invention.

List of reference signs: 1-core pack assembly; 11-core pack; 111-tab; 112-electrode sheet; 113-separator; 12-wicking component; 121-through-hole; 1211-first through-hole; 1212-second through-hole; 13-insulating tape; 2-battery; 21-casing; 211-vent hole; H1-first direction; and H2-second direction.

### Detailed Description of the Embodiments

In the description of the present invention, unless otherwise specified and limited, the terms "interconnect," "connect," and "fix" should be understood broadly. For example, these terms may indicate fixed connections, detachable connections, or integral connections; mechanical or electrical connections; direct connection, indirect connection through an intermediary, or internal communication of two elements or interaction relationship between two elements. For those skilled in the art, the specific meanings of the above terms in the present invention can be understood according to specific situations.

In the present invention, unless otherwise specified and limited, a first feature being "above" or "below" a second feature may include the first feature being in direct contact with the second feature, or the first feature being in contact with the second feature through other features therebetween instead of direct contact. Moreover, the first feature being "above," "upper," and "on" the second feature include the first feature being above and obliquely above the second feature, and the first feature being at a higher horizontal level than the second feature. The first feature being "below," "under," and "beneath" the second feature include the first feature being below and obliquely below the second feature, and the first feature being at a lower horizontal level than the second feature.

In the description of the following embodiments, the terms indicating orientation or positional relationship such as "upper," "lower," "left," "right," "front," "rear," and the like are based on the orientation or positional relationships shown in the drawings, for convenience of description and simplification of operation. These terms are not intended to indicate or imply that a referred device or element must have a specific orientation or must be constructed and operated in a specific orientation, and therefore should not be construed as limiting the present invention. In addition, the terms "first" and "second" are used for descriptive purposes only and do not imply any special meaning.

Taking a lithium-ion battery as an example, the amount of the electrolyte retained in a core pack of a secondary battery is generally fixed. In a later stage of a cycle life of the secondary battery, when the electrolyte inside the core pack is significant consumed, the energy storage performance of the secondary battery may sharply decline, leading to a "cycle life cliff" phenomenon.

Research by the inventors has contributed to the following discoveries: the amount of the electrolyte stored inside the lithium-ion battery can be increased by reducing surface density of an electrode sheet, increasing a thickness of a separator, and some other measures. However, these measures also reduce the energy density of the lithium-ion battery, causing a decrease in the capacity of the lithium-ion battery and significantly affecting the user experience.

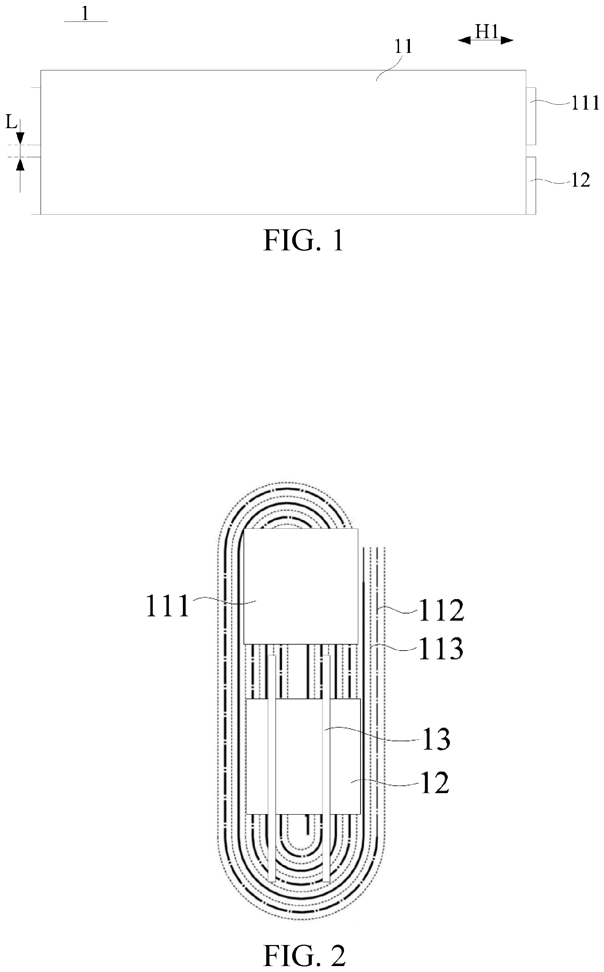

Based on the above, in a first aspect, the present invention provides a core pack assembly 1. In some embodiments, referring to FIG. 1, the core pack assembly 1 includes:
a core pack 11 provided with one or more tabs 111; and
one or more wicking components 12 arranged on an outer surface of the core pack 11, wherein the one or more wicking components 12 are located on a same side as the one or more tabs 111, and are configured to absorb electrolyte outside the core pack 11 and transfer the electrolyte into the core pack 11.

Each wicking component 12 can absorb the electrolyte released outside the core pack 11 and store the electrolyte inside the wicking component 12. When a certain amount of electrolyte is consumed during a cycle of the core pack 11, the electrolyte inside the wicking component 12 connected to the core pack 11 will be supplemented into the core pack 11 due to a diffusion effect, thereby improving the cycle performance of the core pack 11. On the other hand, during a repeated charging and discharging process of the core pack 11, a temperature of the core pack 11 will keep increasing, which will cause the core pack 11 to expand and hence be compressed by a casing 21, thereby the electrolyte may be squeezed out of the core pack 11. In such cases, the wicking component 12 arranged on a side surface of the core pack 11 can absorb the squeezed-out electrolyte and transfer the electrolyte into the core pack 11 after the core pack 11 cools down or after the electrolyte in the core pack 11 is consumed, achieving the replenishment of the electrolyte in the core pack 11.

The wicking component 12 usually absorbs and stores the electrolyte through capillary action, preventing electrolyte leakage while guiding the electrolyte back into the core pack 11, thereby maintaining a normal working state of the core pack 11. For example, the wicking component 12 can be a mesh structure woven from fibers or a sponge-like porous structure to ensure that the wicking component 12 has enough liquid absorption capacity. There are various ways to connect the wicking component 12 to the core pack 11. For example, a corrosion-resistant adhesive may be disposed between the core pack 11 and the wicking component 12 to achieve bonding therebetween. As another example, hot pressing may be utilized to attach the wicking component 12 to the outer surface of the core pack 11. As still another example, a connection structure may be configured between the wicking component 12 and the core pack 11, such as providing a protrusion on the core pack 11 and providing a corresponding groove on the wicking component 12, to achieve a stable connection between the wicking component 12 and the core pack 11 through a cooperation of the protrusion and the groove.

It is understandable that the core pack 11 usually has two tabs 111, and correspondingly, the core pack 11 may have two wicking components 12, thereby absorbing the electrolyte over a larger area, reducing the mass of the electrolyte released outside the core pack 11, and allowing more electrolyte to be supplemented to the core pack 11. This improves the cycle performance of the core pack 11. The shape, material, and size of the two wicking components 12 can be set as needed, and the two wicking components 12 can be symmetrically or asymmetrically configured, which is not limited in the present invention.

In the above embodiments of the present invention, by providing one wicking component 12 on the side surface of the core pack 11, the wicking component 12 can absorb the electrolyte outside the core pack 11 that is difficult to be utilized, and transfer that part of the electrolyte to the core pack 11, which actually improves the amount of the electrolyte contained in the core pack 11 without changing a volume of a battery 2, thereby slowing down a degradation rate of the cycle performance of the battery 2 during use. Moreover, the wicking component 12 can further absorb the electrolyte squeezed out from the core pack 11 when the core pack 11 encounters external impact or temperature rise, which effectively slows down a leakage rate of the electrolyte from the core pack 11, maintaining the performance of the core pack 11 at a relatively high level.

In some embodiments, referring to FIG. 2, the core pack 11 includes stacked electrode sheets 112 and separator(s) 113. The electrode sheets 112 are provided with the tabs 111 on edges on at least one side in a first direction H1, and each wicking component 12 covers the edges of the electrode sheets 112 and the separator 113 on the same side along the first direction H1. The wicking component 12 is configured to absorb the electrolyte outside the core pack 11 and transfer the electrolyte into a space between the electrode sheet 112 and the separator 113.

The core pack 11 can be of a wound or stacked type, with the tabs 111 being made of a conductive material (such as copper, aluminum, nickel, or various alloys) arranged on a side surface of the core pack 11 to achieve electrical connection between the core pack 11 and an external circuit. Taking the stacked core pack 11 as an example, the stacked core pack 11 includes stacked positive electrode sheets 112, negative electrode sheets 112, and separators 113. Width ends (i.e., ends in a width direction) of the positive and negative electrode sheets 112 respectively extend out with tab welding parts to be welded to the tabs 111. The tab welding parts are configured to be welded to the tabs 111. However, since traditional power batteries involves arranging and welding multiple tabs, a top sealing area of the power batteries is usually designed to be relatively large and cannot be fully utilized, and thus causing a waste of space. Therefore, in some embodiments of the present invention, the wicking component 12 is arranged adjacent to the tabs 111, allowing the top sealing area to be used to store the electrolyte, maximizing the utilization of the internal space of the battery 2.

The wicking component 12 covers the edges of the electrode sheets 112 and the separator 113 on the same side along the first direction H1, allowing the electrolyte squeezed out from the electrode sheets 112 or the separator 113 to be quickly absorbed by the wicking component 12, and further allowing the electrolyte to be transported back into the core pack 11 after the electrolyte in the core pack 11 is consumed, improving a transport efficiency of the wicking component 12.

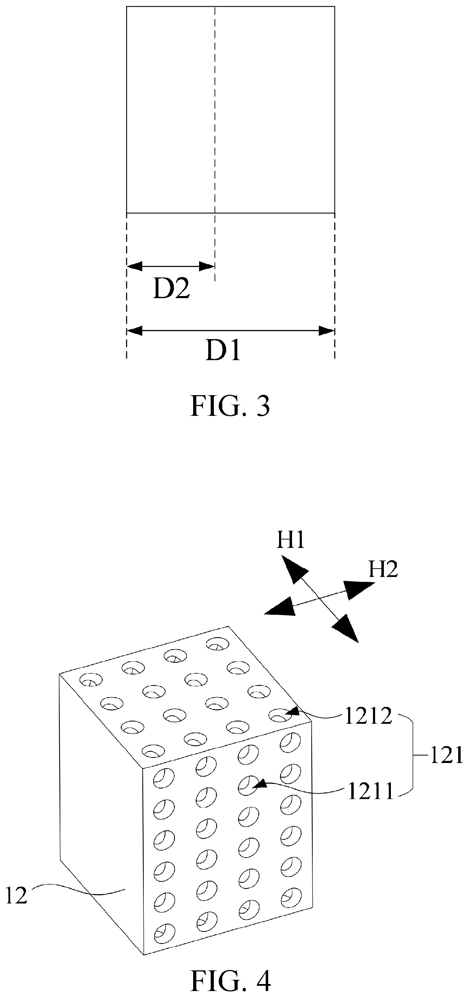

In some embodiments, referring to FIG. 3, a thickness of the wicking component 12 in a relaxed state is *D1,* and a thickness of the wicking component 12 under a pressure of 1 ton-force is *D2,* with 0.02≤*D2*/*D1*≤0.6; and/or
an oil absorption value of the wicking component 12 is *a*, with 0.15g/cm³≤*a*≤1.1g/cm³.

If a compression ratio *D2*/*D1* is less than 0.02, which indicates that the wicking component 12 will be excessively compressed under a relatively small pressure, a pore space for storing the electrolyte will be significantly reduced under external force (such as an impact during the assembly or usage of the battery 2, or squeezing of the wicking component 12 caused by expansion of the core pack 11), and the electrolyte absorbed in the wicking component 12 can be easily squeezed out, making it difficult to supplement the electrolyte to the core pack 11 by storing the released electrolyte. If the compression ratio *D2*/*D1* is greater than 0.6, which indicates that the wicking component 12 has a higher strength, the structure of the core pack 11 or the tab 111 can be easily compressed or damaged when subjected to external force, and the wicking component 12 exhibits a reduced capability to absorb the electrolyte. Consequently, the wicking component 12 fails to effectively absorb and retain the released electrolyte nearby, leading to insufficient enhancement in the cycle performance of the core pack 11.

Therefore, in the present invention embodiment, the compression ratio *D2*/*D1* of the wicking component 12 is set between 0.02 and 0.6, which can be 0.02, 0.05, 0.10, 0.15, 0.20, 0.25, 0.30, 0.40, 0.50, 0.60, etc. This allows the wicking component 12 to maintain a certain spatial structure to store the electrolyte after being compressed, and to cache the electrolyte by deforming to some extent when subjected to external forces, thereby reducing the likelihood of causing adverse effects on other components of the battery 2. It is understandable that the compression ratio is usually related to a material type and an internal structure of the wicking component 12, which can be adjusted to achieve a suitable compression ratio.

The capacity of the wicking component 12 to accommodate the electrolyte can also be represented by the oil absorption value *a*, which indicates the mass of the electrolyte that can be accommodated per cubic centimeter inside the wicking component 12. If the oil absorption value *a* is less than 0.15g/cm³, the electrolyte that the wicking component 12 can accommodate is too little, resulting in a limited ability to supplement electrolyte to the core pack 11. Conversely, if the oil absorption value is greater than 1.1g/cm³, the electrolyte that the wicking component 12 can absorb is too much, and the wicking component 12 may absorb the electrolyte from the core pack 11. This can negatively impact various performances of the core pack 11 in an early stage, and the excessive electrolyte accumulated in the wicking component 12 may cause the electrolyte to gather together, making the electrolyte unable to be transferred into the core pack 11 under gravity, resulting in poor improvement in the cycle performance of the core pack 11. Therefore, in some embodiments of the present invention, the oil absorption value *a* of the wicking component 12 is set between 0.15g/cm³ and 1.1g/cm³, which can be 0.15g/cm³, 0.20g/cm³, 0.25g/cm³, 0.30g/cm³, 0.35g/cm³, 0.40g/cm³, 0.60g/cm³, 0.80g/cm³, 1.10g/cm³, etc., ensuring that the wicking component 12 can absorb enough electrolyte while the mass of the electrolyte inside the wicking component 12 is not too much, allowing the electrolyte to be smoothly guided into the core pack 11.

In some embodiments, the wicking component 12 includes at least one of a polyethylene part, a polypropylene fiber part, a polytetrafluoroethylene part, a non-woven fabric part, an aramid part, and a polyamide part.

Polyethylene, polypropylene fiber, polytetrafluoroethylene, non-woven fabric, aramid, and polyamide all have good corrosion resistance and can store a certain amount of electrolyte, making them very suitable for being made into the wicking component 12. It is understandable that two or more of the above materials can be combined to form an entire wicking component 12, enabling the formed wicking component 12 to have a suitable oil absorption value *a*. In a case where two wicking components 12 are respectively arranged at both ends of the core pack 11, the two wicking components 12 can have same or different materials, which can be set according to actual needs.

In some embodiments, referring to FIG. 1, each wicking component 12 is spaced from a tab 111 adjacent to the wicking component 12.

Since the wicking component 12 usually stores a certain amount of electrolyte, to prevent the wicking component 12 or the electrolyte inside the wicking component 12 from contacting the tab 111 (such contact would increase heat generated during operation of the tab 111 and increase the probability of thermal runaway inside the core pack 11), in some embodiments of the present invention, the wicking component 12 is spaced from the adjacent tab 111, thereby improving the safety of the core pack assembly 1. The wicking component 12 can be configured as a ring, allowing the tab 111 to pass through a hole in the middle of the wicking component 12, thereby avoiding the tab 111 from being affected by the electrolyte in the wicking component 12.

In some embodiments, referring to FIG. 1, a distance between the wicking component 12 and the adjacent tab 111 is L, with 3mm≤*L*≤10mm. If *L* is less than 3mm, the distance between the wicking component 12 and the tab 111 is too small, and the relatively soft wicking component 12 can easily approach and contact the tab 111 under external force, which affects a normal use of the tab 111. If *L* is greater than 10mm, the space available for arranging the wicking component 12 is reduced, that is, a volume of the wicking component 12 is reduced, diminishing the capacity of the wicking component 12 to accommodate the electrolyte, which makes it challenging for the wicking component 12 to effectively enhance the cycle performance of the core pack 11. Therefore, in some embodiments of the present invention, the distance L between the wicking component 12 and the tab 111 is set between 3mm and 10mm, which can be 3mm, 4mm, 5mm, 6mm, 7mm, 8mm, 9mm, 10mm, etc., allowing the wicking component 12 and the tab 111 to maintain a relatively safe distance while the wicking component 12 can store enough electrolyte to supplement more electrolyte to the core pack 11 after the electrolyte in the core pack 11 is consumed.

In some embodiments, referring to FIG. 4, each wicking component 12 is provided with one or more through-holes 121.

A manufacturing process of the battery 2 needs to include a formation process, which is to activate positive and negative active materials inside the core pack 11 through a certain charging and discharging process, so as to form a solid electrolyte phase interface. During the formation process of the core pack 11, the electrolyte will decompose to produce hydrogen and carbon dioxide gases. Therefore, to allow the hydrogen and carbon dioxide gases to be more smoothly discharged from the inside of the battery 2, in some embodiments of the present invention, one or more through-holes 121 are formed on the wicking component 12, which allows the gases to flow through the through-holes 121 and finally be discharged to the outside of the battery 2 through a vent hole 211 on the casing 21 of the battery 2, thereby improving an exhaust efficiency during the formation process and further improving an production efficiency of the battery 2.

In some embodiments, referring to FIG. 1 and FIG. 4, the core pack 11 is provided with the tabs 111 on at least one side in the first direction H1. The through-hole 121 includes a first through-hole 1211 extending along the first direction H1. That is, one end of the first through-hole 1211 is controlled to face the core pack 11, allowing the gases produced inside the core pack 11 to be more efficiently discharged from the first through-hole 1211, thereby improving the exhaust efficiency during the formation process. It is understandable that multiple first through-holes 1211 can be provided, which is not limited in the present invention.

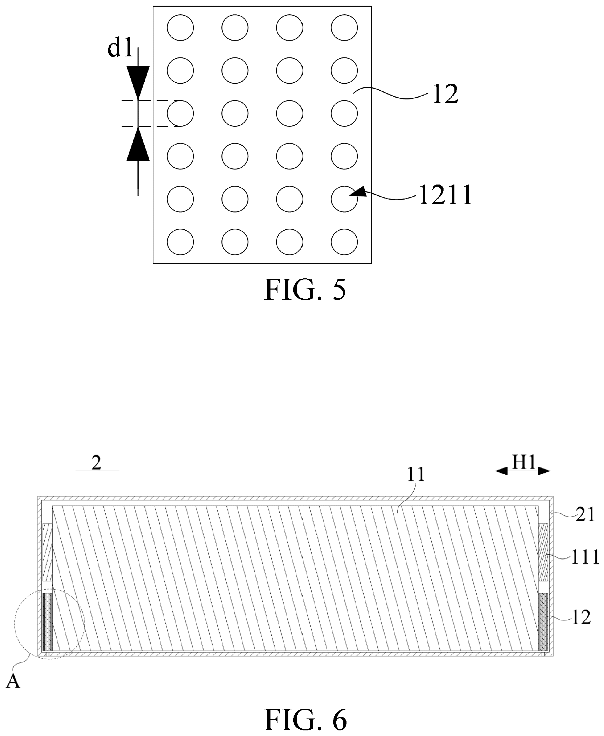

In some embodiments, referring to FIG. 5, a diameter of the first through-hole 1211 is *d1,* with 1mm≤*d1*≤4mm.

If the diameter of the first through-hole 1211 is less than 1mm, the excessively small diameter will significantly impede the gas discharge, easily leading to potential blockages, turbulence, and other situations to occur during gas flow, thereby reducing exhaust efficiency. If the diameter of the first through-hole 1211 is greater than 4mm, the excessively large diameter will have a significant impact on the structure of the wicking component 12, causing uneven distribution of the electrolyte. This may prevent timely transfer of the electrolyte from areas distant from the core pack 11 into the core pack 11, ultimately diminishing the cycle performance of the core pack 11. Therefore, in the present invention embodiment, the diameter *d1* of the first through-hole 1211 is set between 1mm and 4mm, which can be 1mm, 1.5mm, 2mm, 2.5mm, 3mm, 3.5mm, 4mm, etc., avoiding the first through-hole 1211 from significantly impeding the gas flow while maintaining a relatively uniform mass distribution in the structure of the wicking component 12, allowing the electrolyte to be normally transferred into the core pack 11.

In some embodiments, referring to FIG. 4, FIG. 6, and FIG. 7, the through-hole 121 further includes a second through-hole 1212, with one end of the second through-hole 1212 being connected with the first through-hole 1211, and the other end of the second through-hole 1212 facing the vent hole 211 on the casing 21 of the battery 2. By arranging the second through-hole 1212 connected with the first through-hole 1211, the gas discharged from the core pack 11 can enter the second through-hole 1212 along the first through-hole 1211 and finally be discharged towards the vent hole 211 on the casing 21 of the battery 2, improving the exhaust efficiency during the formation process. It is understandable that multiple second through-holes 1212 can be provided, which is not limited in the present invention.

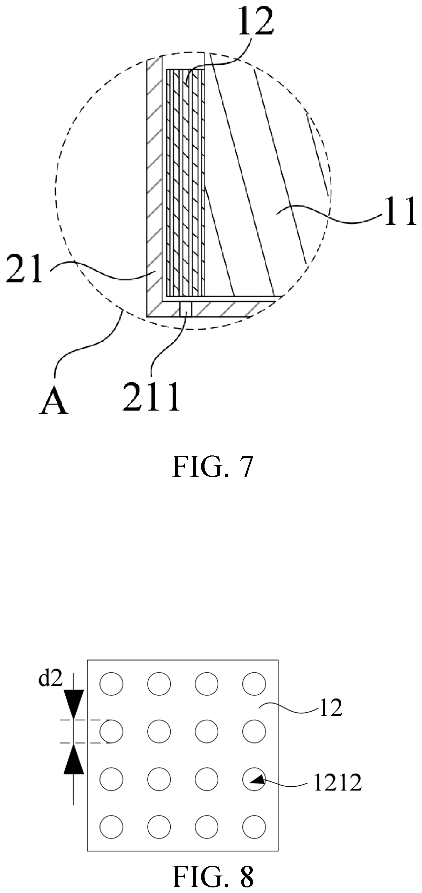

In some embodiments, referring to FIG. 8, a diameter of the second through-hole 1212 is *d2,* and the thickness of the wicking component 12 is *D1,* with 1mm≤*d2*< *D1.* If the diameter of the second through-hole 1212 is less than 1mm, the excessively small diameter will significantly impede the gas discharge, easily leading to potential blockages, turbulence, and other situations to occur during gas flow, thereby reducing exhaust efficiency. If the diameter of the second through-hole 1212 is greater than *D1,* the diameter exceeding the thickness of the wicking component 12 causes the wicking component 12 to break. Therefore, in some embodiments of the present invention, the diameter *d1* of the second through-hole 1212 is set between 1mm and *D1,* which can be 1mm, 1.1mm, 1.2mm, 1.3mm, 1.4mm, 1.5mm, 2mm, etc., avoiding the second through-hole 1212 from significantly impeding the gas flow while maintaining a relatively stable structure of the wicking component 12.

In some embodiments, porosity of the through-hole 121 is b, with 10%≤*b*≤30%. If the porosity b is greater than 30%, the through-hole 121 may occupy too much volume, which is not conducive to the storage of the electrolyte in the wicking component 12, reducing the liquid storage capacity of the wicking component 12. If the porosity b is less than 10%, the through-hole 121 may be too few, which is not conducive to the gas discharge, affecting a completion efficiency of the formation process. Therefore, in some embodiments of the present invention, the porosity b is set between 10% and 30%, which can be 10%, 12%, 14%, 16%, 18%, 20%, 25%, 30%, etc., allowing the wicking component 12 to store enough electrolyte while ensuring that the through-hole 121 has a certain volume, allowing the gases to be discharged quickly, thereby improving the completion efficiency of the formation process.

In some embodiments, referring to FIG. 2, the core pack assembly 1 further includes an insulating tape 13, and the core pack 11 and the wicking component 12 are connected through the insulating tape 13. One end of the insulating tape 13 is connected to the core pack 11, and the other end of the insulating tape 13 is connected to the wicking component 12, thereby fixing a relative position between the wicking component 12 and the core pack 11. For example, the insulating tape 13 can be set to span the wicking component 12, that is, one end of the insulating tape 13 is connected to a part of the core pack 11 on one side of the wicking component 12, and the other end of the insulating tape 13 is connected to another part of the core pack 11 on the other side of the wicking component 12, making the connection between the wicking component 12 and the core pack 11 tighter. It should be noted that in such a case, openings of the first through-hole 1211 and/or the second through-hole 1212 should be arranged to avoid the insulating tape 13, preventing the insulating tape 13 from blocking the gases in the first through-hole 1211.

According to a second aspect of the present invention, a battery 2 is provided, referring to FIG. 1 and FIG. 6, which includes:
a casing 21, and the core pack assembly 1 in the aforementioned embodiments. The core pack assembly 1 is placed inside the casing 21. Since the battery 2 includes the core pack assembly 1, the battery 2 has all the beneficial effects of the core pack assembly 1, which will not be repeated in the embodiments of the present invention.

According to a third aspect of the present invention, a battery pack is provided, which includes the battery 2. The battery pack includes the aforementioned battery 2, and therefore the battery pack has all the beneficial effects of the aforementioned battery 2, which will not be repeated in the embodiments of the present invention.

According to a fourth aspect of the present invention, a vehicle is provide. The vehicle includes the aforementioned battery 2 or battery pack, and therefore the vehicle has all the beneficial effects of the aforementioned battery 2 or battery pack, which will not be repeated in the embodiments of the present invention. The vehicle can be a fuel vehicle, a plug-in hybrid vehicle, or a new energy vehicle, etc., which is not specifically limited in the present invention.

## Claims

1. A core pack assembly, **characterized by** comprising:
a core pack (11), wherein the core pack (11) is provided with tabs (111); and
one or more wicking components (12), wherein each wicking component (12) is arranged on an outer surface of the core pack (11) and located on a same side of the core pack as the tabs (111), and is configured to absorb electrolyte outside the core pack (11) and transfer the electrolyte into the core pack (11).

2. The core pack assembly according to claim 1, **characterized in that** the core pack (11) comprises electrode sheets (112) and a separator (113) which are stacked,
wherein the electrode sheets (112) are provided with the tabs (111) on edges of the electrode sheets on at least one side of the core pack in a first direction (H1), and
each wicking component (12) covers the edges of the electrode sheets (112) and an edge of the separators (113) on the same side of the core pack along the first direction (H1), and is configured to absorb the electrolyte outside the core pack (11) and transfer the electrolyte into a space between the electrode sheets (112) and the separator (113).

3. The core pack assembly according to claim 1, **characterized in that** a thickness of each wicking component (12) in a relaxed state is *D1,* and a thickness of the wicking component (12) under a pressure of 1 ton-force is *D2,* with 0.02≤*D2*/*D1*≤0.6; and/or
an oil absorption value of the wicking component (12) is *a*, with 0.15g/cm³≤*a*≤1.1g/cm³.

4. The core pack assembly according to claim 3, **characterized in that** the wicking component (12) comprises at least one of a polyethylene part, a polypropylene fiber part, a polytetrafluoroethylene part, a non-woven fabric part, an aramid part, and a polyamide part.

5. The core pack assembly according to claim 1, **characterized in that** each wicking component (12) is spaced from an adjacent one of the tabs (111).

6. The core pack assembly according to claim 5, **characterized in that** a distance between the wicking component (12) and the adjacent tab (111) is L, with 3mm≤*L*≤10mm.

7. The core pack assembly according to any one of claims 1 to 6, **characterized in that** each wicking component (12) is provided with one or more through-holes (121).

8. The core pack assembly according to claim 7, **characterized in that** the core pack (11) is provided with the tabs (111) on at least one side of the core pack in the first direction (H1), and the one or more through-holes (121) comprise a first through-hole (1211) extending along the first direction (H1).

9. The core pack assembly according to claim 8, **characterized in that** a diameter of the first through-hole (1211) is *d1,* with 1mm≤*d1*≤4mm.

10. The core pack assembly according to claim 8, **characterized in that** the through-holes (121) further comprise a second through-hole (1212), with one end of the second through-hole (1212) being connected with the first through-hole (1211) and the other end of the second through-hole (1212) facing a vent hole (211) on a casing (21) of a battery (2).

11. The core pack assembly according to claim 10, wherein a diameter of the second through-hole (1212) is *d2,* and a thickness of the wicking component (12) is *D1,* with 1mm≤*d2<D1.*

12. The core pack assembly according to claim 7, **characterized in that** porosity of the through-hole (121) is b, with 10%≤b≤30%.

13. The core pack assembly according to any one of claims 1 to 6, **characterized in that** the core pack assembly (1) further comprises an insulating tape (13), and the core pack (11) and each wicking component (12) are connected together through the insulating tape (13).

14. A battery, **characterized by** comprising:
a casing (21); and
the core pack assembly (1) according to any one of claims 1 to 13, with the core pack assembly (1) placed inside the casing (21).

15. A battery pack, **characterized by** comprising the battery (2) according to claim 14.

16. A vehicle, **characterized by** comprising the battery (2) according to claim 14 or the battery pack according to claim 15.
